(19) **Europäisches Patentamt**
**European Patent Office**
**Office européen des brevets**

(11) **EP 3 997 489 B1**

(12) **EUROPEAN PATENT SPECIFICATION**

(45) Date of publication and mention
of the grant of the patent:
**15.05.2024 Bulletin 2024/20**

(21) Application number: **19783605.9**

(22) Date of filing: **09.07.2019**

(51) International Patent Classification (IPC):
**G01V 99/00** *(2024.01)*

(52) Cooperative Patent Classification (CPC):
**G01V 20/00;** G01V 2210/66

(86) International application number:
**PCT/IB2019/000863**

(87) International publication number:
**WO 2021/005395 (14.01.2021 Gazette 2021/02)**

(54) **A METHOD FOR ADAPTING AN UNSTRUCTURED MESH MODEL OF A GEOLOGICAL SUBSURFACE**

VERFAHREN ZUR ANPASSUNG EINES UNSTRUKTURIERTEN MESH-MODELLS EINES GEOLOGISCHEN UNTERGRUNDS

PROCÉDÉ D'ADAPTATION D'UN MODÈLE À MAILLAGE NON STRUCTURÉ D'UN SOUS-SOL GÉOLOGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.05.2022 Bulletin 2022/20**

(73) Proprietor: **TotalEnergies OneTech**
**92400 Courbevoie (FR)**

(72) Inventor: **FORGE, Aurele**
**64018 PAU Cedex (FR)**

(74) Representative: **Plasseraud IP**
**66, rue de la Chaussée d'Antin**
**75440 Paris Cedex 09 (FR)**

(56) References cited:
**EP-A1- 3 106 900     EP-A2- 2 869 096**
**US-B1- 8 600 708**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present disclosure relates to the field of adapting representations of geological subsurfaces to match a target representation and to assist with reliable determination of geological subsurfaces.

**DESCRIPTION OF THE PRIOR ART**

For proper determination of gas or hydrocarbon reserves in a reservoir, it is useful to establish grids (or a mesh model) of the reservoirs, for example on the basis of 2D and or 3D seismic interpretation of the subsurface.

The reservoir grids contain mesh layers. These layers often tend to be representative of the stratigraphic layers present in the subsurface.

Thus, the mesh layers of the model attempt to follow the stratigraphic layers determined by various tools (seismic tools, modeling based on well data, etc.). In addition, a mesh may be constrained by a number of topological and/or geometrical conditions.

It is possible that the various tools available to geologists or well engineers do not provide the same results, or that topological and/or geometric conditions (for example well data) do not exactly match the results provided by these tools. In addition, these tools can provide results containing uncertainties (interpretation of a noisy seismic image or depth conversion for example). Alternative solutions can then exist.

When modifying to an alternative solution, it is often necessary to completely recalculate a new mesh model to adapt to this modification.

This recalculation can be long, tedious, and inefficient, especially if the differences between the initial solution and the new solution are small.

The patent application document EP 3 106 900 describes a device, system and method for performing a 3D interpolation in a 2D interpolation stage and a 1D interpolation stage to generate a refined geological-time. A 3D model may be obtained of a subsurface region defined by an initial geological-time in the past when particles in the subsurface region are determined to have been originally deposited. The stages of the 3D interpolation may include a 2D interpolation along one or more initial 2D reference horizon surfaces to generate one or more reshaped 2D reference horizon surfaces, and a 1D interpolation based on the initial geological-time along one or more 1D interpolation lines to generate a refined geological-time, wherein each 1D interpolation line is approximately orthogonal to the initial 2D reference horizon surfaces. The 3D model may be displayed according to the refined geological-time.

There is therefore a need to simplify the calculation of a new model in the case of modifying a solution to an alternative solution.

In previous solution, it has been proposed to modify the model along the pillars of the model.

Nevertheless, there is a huge requirement: the mesh of the model should have said pillars. In other words, it is quite impossible to apply said solution of the prior art to unstructured model (with tetrahedral cells for instance). Indeed, due to the shape of the cell, no pillar may be easily defined. The unstructured mesh does not have an explicit representation of the stratigraphy but it contains an implicit description of the stratigraphic, typically using a set of dedicated properties. The implicit representation of the stratigraphy is then provided for unstructured mesh.

**DESCRIPTION OF THE DISCLOSURE**

The present invention improves the situation.

To this end, the present disclosure proposes deforming the grid of the initial model in order to allow adapting the initial model to the new alternative solution without recalculating the entire model, on an unstructured model.

The disclosure therefore provides a computer-implemented method for adapting an unstructured mesh model of a geological subsurface obtained using measurements of said geological subsurface, to match it to a target,

said unstructured mesh model comprising a first reference interface and a second reference interface, the first reference interface being associated with a first target interface, the second reference interface being associated with a second target interface,

meshes of the unstructured mesh model having corners with coordinates (x, y, z) within said model and with parametric values (u,v,t) within said model, t representing a stratigraphic time for corners

wherein the method comprises:

- for each corner between the first reference interface and the second reference interface :

    - determining a vector at said corner, said vector is determined to maximize local variation of t, (u,v) being locally constant along said vector, values of parametric values (u, v, t) being determined based on neighboring corners for the determination of said vector;

- determining a first distance between said corner and said first reference interface along said vector;

- determining a second distance between said corner and said second reference interface along said vector;

- determining a third distance between said corner and said first target interface along said vector;

- determining a fourth distance between said corner and said second target interface along said vector;

- modifying the coordinates for said corner along said vector as a function of the first distance, the second distance, the third distance and the fourth distance

In addition, it is possible that a current coordinate system is defined along a line passing through said vector, a first intersection between said line and said first reference interface has a coordinate $c_1$ in the current coordinate system, a second intersection between said line and said second reference interface has a coordinate $c_2$ in the current coordinate system, a third intersection between said line and said first target interface has a coordinate $c_3$ in the current coordinate system, a fourth intersection between said line and said second target interface has a coordinate $c_4$ in the current coordinate system, said current corner having an initial coordinate $c_c$ in the current coordinate system. The modified coordinate of said current corner in the current coordinate system may be then a function of $Cn - Cc = C2 - C4$

$$(C1 - C3 - C2 + C4)\frac{Cc - C2}{C1 - C2}.$$

In a possible embodiement of the disclosure the method further comprises, for each corner between the first reference interface and the second reference interface:

- a second modification of the coordinates of said corner as a function of the current coordinates of said current corner and as a function of the current coordinates of distant corners that lie within a bounding box around the current corner.

In a possible embodiement of the disclosure, the coordinates of the corners being expressed by a plurality of components, the second modification of the coordinates of said corner may comprise calculating a median filter or an average of the coordinates of said current corner along at least one component of the coordinates of said distant corners along the at least one component.

In a possible embodiement of the disclosure the bounding box may be a function of a distance from said current corner to a fault in said model.

In a possible embodiement of the disclosure the bounding box may be a function of an anisotropic direction in said model.

In a possible embodiement of the disclosure the anisotropic direction may be parallel to a line passing through said current corner and perpendicular to a fault in said model.

In a possible embodiement of the disclosure, the coordinates of the corners being expressed by a plurality of components, the distance between a current corner and a modified current corner, along at least one coordinate component, may be less than a threshold value.

In a possible embodiement of the disclosure, the model comprising at least one fault, the method may further comprise:

- identifying at least one corner having a distance to the at least one fault that is less than a predetermined influence distance;

- modifying the coordinates of the corner having a distance to the at least one fault that is less than the predetermined influence distance, as a function of modifications determined for a plurality of points having a distance to the at least one fault that is greater than the predetermined influence distance and part of a common interface with the corner having a distance to the at least one fault that is less than the predetermined influence distance.

In a possible embodiement of the disclosure the modification of the coordinates of the corner having a distance to the at least one fault that may be less than the predetermined influence distance comprises a calculation of a weighted average.

In a possible embodiement of the disclosure the modification of the coordinates of the corner having a distance to the at least one fault that may be less than the predetermined influence distance includes a regression.

The disclosure also provides a device for adapting an unstructured mesh model of a geological subsurface obtained using measurements of said geological subsurface, to match it to a target,

said unstructured mesh model comprising a first reference interface and a second reference interface, the first reference interface being associated with a first target interface, the second reference interface being associated with a second target interface,

meshes of the unstructured mesh model having corners with coordinates (x, y, z) within said model and with parametric values (u,v,t) within said model, t representing a stratigraphic time for corners

wherein the device comprises:

- for each corner between the first reference interface and the second reference interface :

  - a circuit for determining a vector at said corner, said vector is determined to maximize local variation of t, (u,v) being locally constant along said vector, values of parametric values (u, v, t) being determined based on neighboring corners for the determination of said vector;

  - a circuit for determining a first distance between said corner and said first reference interface along said vector;

  - a circuit for determining a second distance between said corner and said second reference interface along said vector;

  - a circuit for determining a third distance between said corner and said first target interface along said vector;

  - a circuit for determining a fourth distance between said corner and said second target interface along said vector;

- a circuit for modifying the coordinates for said corner along said vector as a function of the first distance, the second distance, the third distance and the fourth distance ;

- an interface for outputting a modified model based on the modification of the coordinates for said corner.

The disclosure also relates to a computer program comprising instructions for implementing the method described above, when that program is executed by a processor.

This program may use any programming language (for example, an object language or some other language), and be in the form of an executable source code, partially compiled code, or fully compiled code.

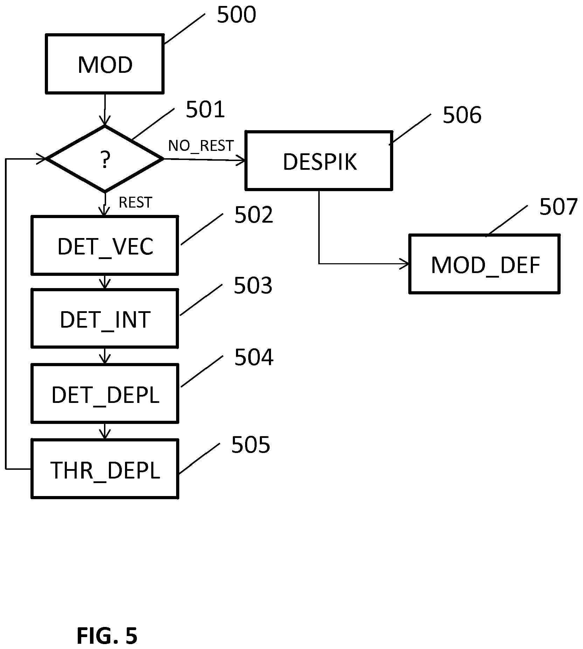

Figure 5, described in detail below, can be the flowchart of the general algorithm of such a computer program.

## DESCRIPTION OF FIGURES

Other features and advantages of the disclosure will be apparent from reading the description that follows. This description is purely illustrative and should be read with reference to the accompanying drawings in which:

- Figure 1 illustrates a particular embodiment of the mesh of a three-dimensional model;

- Figure 2 illustrates an example of reference interfaces and target interfaces in a particular embodiment of the disclosure;

- Figure 3a illustrates an example of calculating parametric values for any points of the model;

- Figure 3b illustrates an example of determining deformation direction in an unstructured mesh;

- Figure 4 illustrates an example modification of the coordinates of a cell corner as a function of the coordinates of nearby cells by a creation of a bounding box for smoothing/despiking the deformation;

- Figure 5 shows a possible flow diagram of an embodiment of the disclosure;

- Figure 6 shows a possible computing device for deforming a mesh, making use of an embodiment of the disclosure.

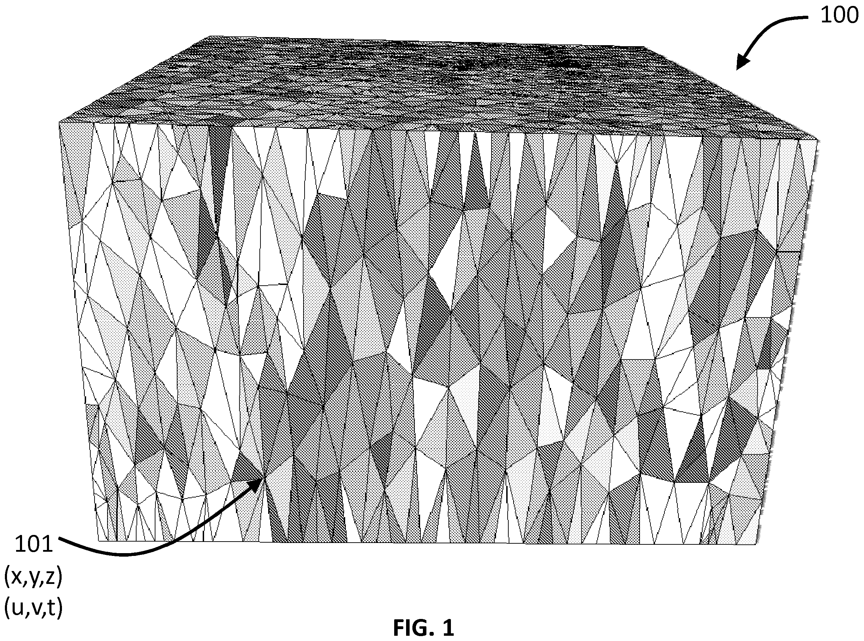

Figure 1 illustrates one particular embodiment of the mesh of a three-dimensional model.

This model 100 consists of a plurality of cells. In addition, these cells comprise corners. Most often, these corners are shared by multiple cells (for example 4 cells).

In the present case, the mesh is unstructured and not stratigraphic.

Each corner may have coordinates (x, y, z) in said model. These coordinates may also be called "geometric coordinates".

In addition, each corner may also have parametric value (u, v, t) (or parametric coordinates): these parametric values may represent 2D coordinates (u, v) for a given stratigraphic time of sedimentation. In a degenerated case, only t could be provided, (u,x) being derived from x and y.

Therefore, a parametric value (u0, v0, t0) of a corner indicates that said corner was a point where sedimentation occurred at time t0 and had horizontal coordinates of (u0, v0) at said time t0.

Indeed, the geometric coordinates (x, y, z) of the model only represents the subsoil in the present time. Therefore, the parametric values of the corner of the model provide a way to represent modification of said model within space-time, due to sedimentation and tectonics.

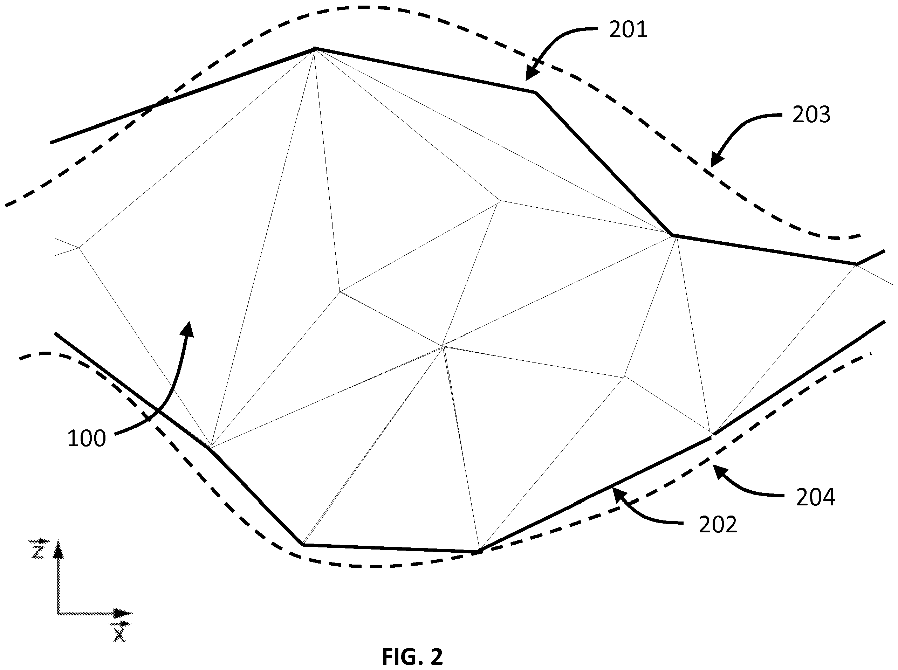

Figure 2 illustrates an example of reference interfaces and target interfaces in one particular embodiment of the disclosure.

For simplification, Figure 2 is shown in two dimensions, but the following description is also applicable to a three-dimensional mesh.

The mesh 100 comprises a stratigraphic layer of cells defined by two interfaces 201 and 202. The stratigraphic layer may correspond to cell limits, but this is not necessarily the case as the mesh is not stratigraphic, meaning an interface of stratigraphic layer can cut through cells.

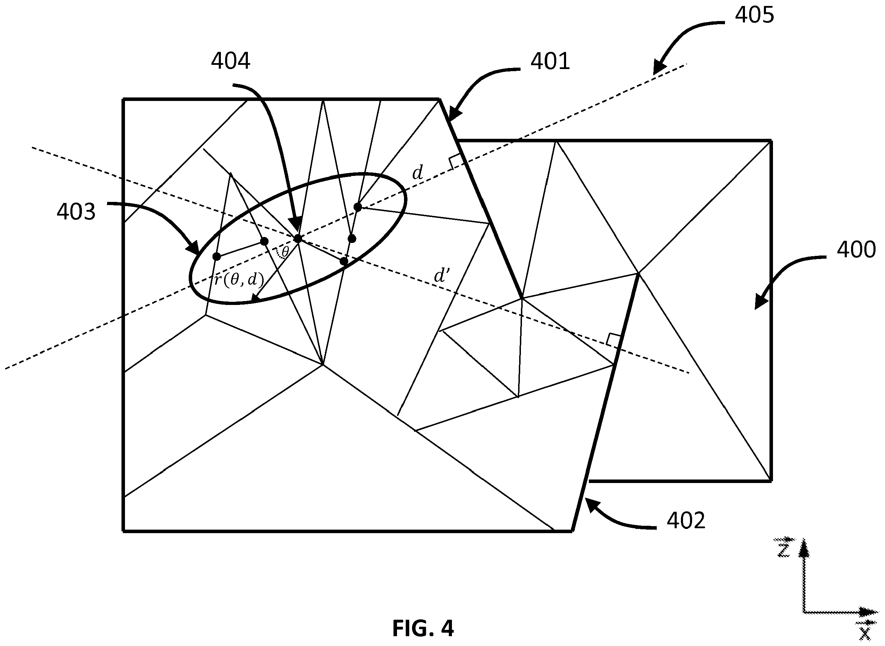

A layer can have a discontinuity, particularly in the event of faults being present (see Figure 4). interfaces 201 and 202 are also called reference interfaces.

For the reasons described above, geologists or well engineers may feel that these reference interfaces are not properly positioned spatially. They may also judge that the correct spatial position of these interfaces (201 and 202) should be at the target interfaces (203 and 204 respectively) represented in Figure 2.

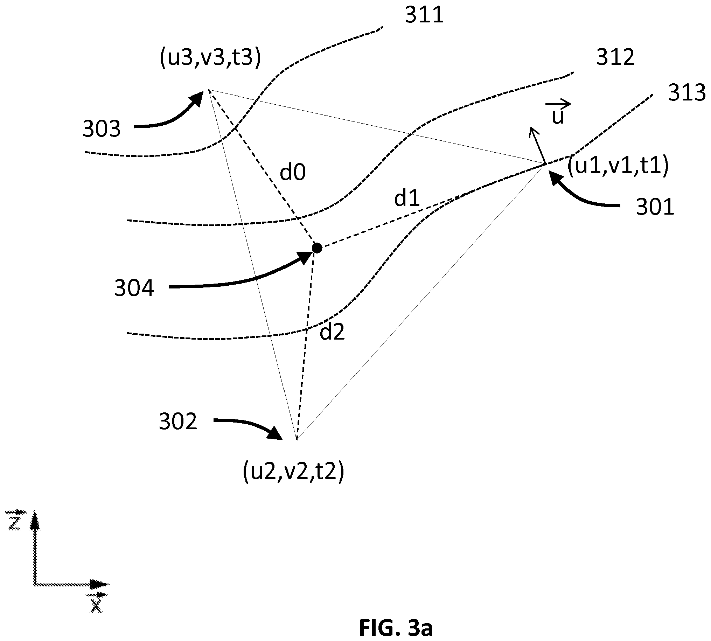

Figure 3a illustrates an example of calculating parametric values for any points of the model.

In the present case and just for the below explanation, it is assumed that any corner of the plan $(\vec{x}, \vec{z})$ has parametric values constant for u and v. If it is not, it is possible to define a surface in the model for which any point of this surface has the same u and v for their parametric values. Therefore, with a simple mathematical modification, it is always possible to apply the following to any wrapped domain (or non-planar domain).

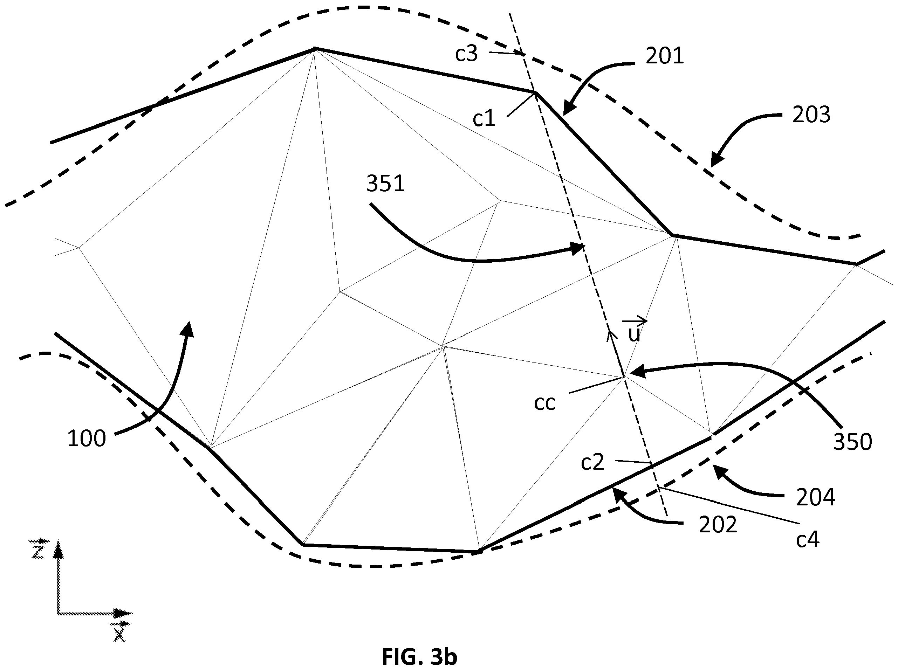

In Figure 3, it is possible to identify a triangular mesh with three corners (301 with parametric values (u1, v1, t1), 302 with parametric values (u2, v2, t2), 303 with parametric values (u3, v3, t3)).

This triangular mesh may be of any shape/form.

For any point of the mesh, it is possible to compute local parametric values (u, v, t) based on the neighboring corners. The neighboring corners may be determined based on a plurality of methods, e.g.:

- the neighboring corners may be the corners of the cell containing the point ;

- the neighboring corners may be the corners within a given distance of the point;

- etc.

The distance may be a Euclidean distance, a Manhattan distance, a Minkowski distance, a Chebyshev distance, or any other distance in the mathematical sense.

In order to compute said local parametric values (u, v, t), it is possible to determine a weighted mean of all parametric values of said determined neighboring corners.

The weight (for this weighted mean) may be the distance between said point and each neighboring corner (e.g. d1 is the distance between the point 304 and the corner 301, d2 is the distance between the point 304 and the corner 302, d0 is the distance between the point 304 and the corner 303).

Once said local parametric values is determined for points of the model, it is possible to determine a vector for each corner of the model. Said vector $\vec{u}$ fulfil the following requirements:

- vector $\vec{u}$ is determined to maximize local variation of t of the parametric values (i.e. $\vec{u}$ is perpendicular of a line 313 where the value t is constant - lines 311 and 312 are also lines where the value t is constant);

- vector $\vec{u}$ is determined so that u and v are locally constant along said vector (i.e. $\vec{u}$ is tangent to a surface where the values u and v are constant).

To ease the description, it is assume that a 1-D coordinates system is defined along the vector $\vec{u}$. Therefore, the position of any point on a line passing through the vector $\vec{u}$ may be identified.

Once this vector $\bar{u}$ is determined for each corner (e.g. 350 in Figure 3b) of the model (or for at least one corner between the reference interfaces 201 and 202), it is possible to move said corner 350 along said vector and based on:

- a first distance between said corner 350 and the first reference interface 201 along said vector $\vec{u}$ ($|cc$ - $c1|$ if cc and C1 is the position in said 1-D coordinates system of the corner 350 and the intersection of a line 351 passing through the vector $\vec{u}$ and the first reference interface 201);

- a second distance between said corner 350 and the second reference interface 202 along said vector $\vec{u}$ ($|cc$ - $c2|$ if cc and C2 is the position in said 1-D coordinates system of the corner 350 and the intersection of a line 351 passing through the vector $\vec{u}$ and the first reference interface 202);

- a third distance between said corner 350 and the first target interface 203 along said vector $\vec{u}$ ($|cc$ - $c3|$ if cc and C3 is the position in said 1-D coordinates system of the corner 350 and the intersection of a line 351 passing through the vector $\vec{u}$ and the first target interface 203);

- a fourth distance between said corner 350 and the second target interface 204 along said vector $\vec{u}$ ($|cc$ - $c4|$ if cc and C4 is the position in said 1-D coordinates system of the corner 350 and the intersection of a line 351 passing through the vector $\vec{u}$ and the first target interface 204).

For the sake of completeness, many algorithms exist for determining an intersection between a straight line and a curve. For example, to determine the intersection of line 351 with curve 203, it is possible to use an algorithm comprising a method of "dual shooting" and dichotomic refining:

a/ From a first point on line 351 (for example point C1), determining two secondary points located at a first given distance from the first point (for example, the distance along $\vec{z}$ between point C1 and curve 203) and located on line 351 on each side of point C1, two segments being created between the first point and each of the two secondary points;

$b_1$/ If one of the two segments contains an intersection with curve 203 (determined by comparing the sign of the difference between the coordinate along $\vec{z}$ of one end of the segment and the coordinate along $\vec{z}$ of the projection along $\vec{z}$ of this latter end onto curve 203, and the sign of the difference between the coordinate along $\vec{z}$ of the other end of the segment and the coordinate along $\vec{z}$ of the projection along $\vec{z}$ of this other end onto curve 203: if the sign is different, this means that there is an intersection between the line and the curve), then refining the position of the intersection by a dichotomic subdivision between the ends of the segment containing the intersection.

$b_2$/ If neither segment contains an intersection with curve 203, then determining, for each of the former secondary points, a new secondary point located at the second distance (for example equal to the first distance) from the former secondary point and being neither the first point nor a previously calculated secondary point, and repeating step $b_1$ and $b_2$ with the two segments formed by each of the former secondary points with the new determined secondary points.

The coordinates of points C3 and C4 can thus be determined.

For the corner 350, it is possible to determine a translation using an "elastic" model. This "elastic" model models a deformation and dragging effect on the corner as a function of the displacement of these interfaces (expansion or contraction).

For example, it is possible to determine a translation of a point CC of the alignment according to the following formulas:

$$Cn - Cc = \frac{C3-C1}{C1-Cc} + \frac{C4-C2}{C2-Cc} \text{ or } Cn - Cc = C2 - C4 - (C1 - C3 - C2 + C4)\frac{Cc-C2}{C1-C2}$$

where Cn is the new position of the corner in the 1-D coordinates system defined on line 351.

If, in the above formulas, the translation of point $C_c$ is linear with regard to the displacements of points C1 and C2, it is also possible to make this translation nonlinear.

Furthermore, it is possible to limit the translation of point $C_c$ by limiting the translation value to a maximum value Cmax. Thus, |*Cn-Cc*| can be equal to $\min\left(\left|C2 - C4 - (C1 - C3 - C2 + C4)\frac{Cc-C2}{C1-C2}\right| ; Cmax\right)$ where min is the minimum operator. If this thresholding is applied to the translation along the axis 351, it may also be applied along axis $\vec{z}$ with a maximum displacement of $z_{max}$ along this axis.

Then the value of the translation |*Cn - Cc*| of corner 350 can be equal to min (|*C2* -

$C4 - (C1 - C3 - C2 + C4)\frac{Cc-C2}{C1-C2}\left| ; \frac{Zmax}{\cos(\alpha)}\right)$ where $\alpha$ is the angle between the axis 350 and $\vec{z}$.

This process may be reiterated for each corner between the two interfaces 201 and 202.

Figure 4 illustrates an example modification of the coordinates of a corner of a cell as a function of the coordinates of nearby cells.

Figure 4 represents a plurality of cells, projected to a plane (the plane of the figure). To avoid certain edge effects (or singularities) generated by the presence of faults in the model 400, it is possible to "smooth" the values of cell coordinates in a spatial direction (for example, the direction of axis $\vec{z}$ , axis representing the vertical in the subsurface model 400).

Thus, for each cell corner 404 of the model, it is possible to average or to calculate a median filter as a function of the coordinates of the corner concerned 404 along axis $\vec{z}$ and the coordinates of neighboring corners (in other words corners at a distance that is less than a certain distance from the corner concerned 404, in a bounding box) along this same axis. Alternativelly, it is possible to compute a regression within the bounding box (i.e. for neighboring corners) to smooth the coordinates of the corners (e.g. linear regression, polynomial regression, or any other regression). The determination of neighboring corners may include calculating a distance r between two points: this distance can be a Euclidean distance, a Manhattan distance, a Minkowski distance, a Chebyshev distance, or any other distance in the mathematical sense.

Moreover, the distance r may be a function of the distance from the point concerned 404 to a fault (in other words d for the distance to fault 401, the distance then being a function r(d)). Indeed, it may be useful to reduce the number of corners considered to be neighbors when the distance to the fault is large, as the probability of the occurrence of a singularity statistically decreases.

The distance r can also be a function of an angle $\theta$ representative of an angle to the direction to the fault (the distance then being a function r($\theta$)). This direction 405 is also called the anisotropic direction. Thus, it is possible to reduce the number of corners considered as neighbors in a direction parallel to the fault and to increase it in a direction perpendicular to the fault, as the probability of the occurrence of a singularity is statistically greater along faults.

As an illustration, the points neighboring point 404 are shown in the center of the ellipse 403 in Figure 4 (the distance being r($\theta$,d), the ellipse being thus the bounding box, but any other forms may exist such as a circle, a square, a rectangle, etc.).

In case of a plurality of faults, it is possible, for calculating the new coordinate of point 404 along axis $\vec{z}$ :

- to consider only the nearest fault in the calculation (in other words fault 401 being closer to corner 404 than fault 402, d' > d)

- or to consider all the faults of the model (401 and 402) and to form a union of the corners identified as neighbors for each of the faults.

Figure 5 illustrates a possible flowchart of one embodiment of the disclosure.

Upon receipt of a mesh model (step 500) comprising two reference interfaces (could be more than two) and associated with target interfaces, it is possible to process it as described in the description.

For instance, if at least one corner of said model that is between the two reference interfaces has not been processed (test 501, REST output), then this corner is selected.

For said selected corner, it is possible to determine (step 502) the vector $\vec{u}$ as described in reference of Figures 3a and 3b.

Then it is possible to determine intersections between a line passing through said vector and the target interfaces and the reference interfaces (step 503) as described in reference of Figure 3b.

On the basis of the coordinates of these intersections, it is then possible to determine translation of the corner along said vector (step 504) as described in reference of Figure 3b.

It is possible to limit the standard translation of the corner as presented above (step 505).

If the corners comprised between the two interfaces have not been processed (test 501, REST output), it is then possible to apply the described method to these corners.

Otherwise (test 501, NO_REST output), a smoothing of the displacement of each corner and as described in relation with Figure 4 can be performed (step 506).

Then the modified model (step 507) can be returned to the operator and/or provided as input to a new calculation module for additional processing.

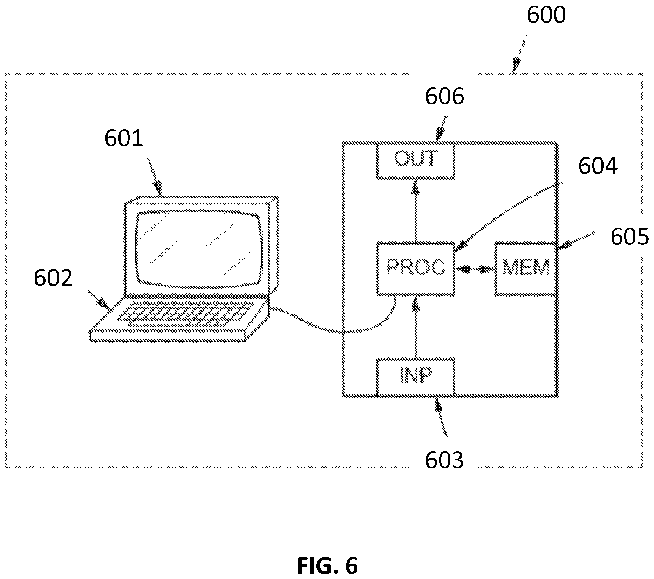

Figure 6 represents an example device for deforming cells of a mesh model, in one embodiment of the disclosure.

In this embodiment, the device comprises a computer 600, comprising a memory 605 for storing instructions for implementing the method, the measurement data received, and temporary data for carrying out the various steps of the method as described above.

The computer further comprises circuitry 604. This circuitry may be, for example:

- a processor adapted to interpret instructions in the form of a computer program, or

- a circuit board in which the steps of the inventive method are laid out in the silicon, or

- a programmable chip such as an FPGA chip ("field-programmable gate array").

This computer comprises an input interface 603 for receiving the input model and the target interfaces, and an output interface 606 for providing a modified model. Finally, the computer may comprise a screen 601 and a keyboard 602, for easy interaction with a user. The keyboard is of course optional, particularly in the context of a computer in the form of a touch tablet for example.

The block diagram shown in Figure 5 is a typical example of a program of which some instructions may be carried out by the device described above. Figure 5 can then correspond to the flowchart of the general algorithm of a computer program within the meaning of the disclosure.

Of course, other embodiments are possible, insofar as they fall within the scope of the invention as set forth in the accompanying claims.

For example, some embodiments described above are applied to two-dimensional models, but they can also easily be applied to three-dimensional models.

**Claims**

1. A computer-implemented method for adapting an unstructured mesh (100) model of a geological subsurface obtained using measurements of said geological subsurface, to match it to a target,

    said unstructured mesh (100) model comprising a first reference interface (201) and a second reference interface (202), the first reference interface (201) being associated with a first target interface (203), the second reference interface (202) being associated with a second target interface (204),
    meshes of the unstructured mesh model having corners (301) with coordinates (x, y, z) within said model and with parametric values (u,v,t) within said model, t representing a stratigraphic time for corners the method **characterized in that** it comprises:

        - for each corner between the first reference interface and the second reference interface (501):

            - determining (502) a vector at said corner, said vector is determined to maximize local variation of t, (u,v) being locally constant along said vector, values of parametric values (u, v, t) being determined based on neighboring corners for the determination of said vector;
            - determining a first distance between said corner and said first reference interface along said vector;
            - determining a second distance between said corner and said second reference interface along said vector;
            - determining a third distance between said corner and said first target interface along said vector;
            - determining a fourth distance between said corner and said second target interface along said vector;

        - modifying (504) the coordinates for said corner along said vector as a function of the first distance, the second distance, the third distance and the fourth distance

**2.** Method according to claim 1, wherein, a current coordinate system being defined along a line passing through said vector,

a first intersection between said line and said first reference interface having a coordinate $c_1$ in the current coordinate system,
a second intersection between said line and said second reference interface having a coordinate $c_2$ in the current coordinate system,
a third intersection between said line and said first target interface having a coordinate $c_3$ in the current coordinate system,
a fourth intersection between said line and said second target interface having a coordinate $c_4$ in the current coordinate system, said current corner having an initial coordinate $c_c$ in the current coordinate system,
the modified coordinate, $Cn$, of said current corner in the current coordinate system is a function of

$$Cn - Cc = C2 - C4 - (C1 - C3 - C2 + C4)\frac{Cc - C2}{C1 - C2}$$ .

**3.** Method according to one of the preceding claims, wherein the method further comprises, for each corner between the first reference interface and the second reference interface:

- a second modification of the coordinates of said corner as a function of the current coordinates of said current corner and as a function of the current coordinates of corners that lie within a bounding box around the current corner.

**4.** Method according to claim 3, wherein, the coordinates of the corners being expressed by a plurality of components, the second modification of the coordinates of said corner comprises calculating a median filter or an average of the coordinates of said current corner along at least one component of the coordinates and of said corners that lie within a bounding box around the current corner along the same at least one component.

**5.** Method according to one of claims 3 to 4, wherein the bounding box is a function of a distance from said current corner to a fault in said model.

**6.** Method according to one of claims 3 to 5, wherein the bounding box is a function of an anisotropic direction in said model.

**7.** Method according to claim 6, wherein the anisotropic direction is parallel to a line passing through said current corner and perpendicular to a fault in said model.

**8.** Method according to one of the preceding claims, wherein, the coordinates of the corners being expressed by a plurality of components, the distance between a current corner and a modified current corner, along at least one coordinate component, is less than a threshold value.

**9.** Method according to one of the preceding claims, wherein, the model comprising at least one fault, the method further comprises:

- identifying at least one corner having a distance to the at least one fault that is less than a predetermined influence distance;
- modifying the coordinates of the corner having a distance to the at least one fault that is less than the predetermined influence distance, as a function of modifications determined for a plurality of points having a distance to the at least one fault that is greater than the predetermined influence distance and part of a common interface with the corner having a distance to the at least one fault that is less than the predetermined influence distance.

**10.** Method according to claim 9, wherein the modification of the coordinates of the corner having a distance to the at least one fault that is less than the predetermined influence distance comprises a calculation of a weighted average.

**11.** Method according to claim 9, wherein the modification of the coordinates of the corner having a distance to the at least one fault that is less than the predetermined influence distance includes a regression.

**12.** A device for adapting an unstructured mesh model of a geological subsurface obtained using measurements of said geological subsurface, to match it to a target,

said unstructured mesh model comprising a first reference interface and a second reference interface, the first reference interface being associated with a first target interface, the second reference interface being associated with a second target interface,
meshes of the unstructured mesh model having corners with coordinates (x, y, z) within said model and with parametric values (u,v,t) within said model, t representing a stratigraphic time for corners
the device **characterized in that** it comprises:

- for each corner between the first reference interface and the second reference interface :

- a circuit for determining a vector at said corner, said vector is determined to maximize local variation of t, (u,v) being locally constant along said vector, values of parametric values (u, v, t) being determined based on neighboring corners for the determination of said vector;
- a circuit for determining a first distance between said corner and said first reference interface along said vector;
- a circuit for determining a second distance between said corner and said second reference interface along said vector;
- a circuit for determining a third distance between said corner and said first target interface along said vector;
- a circuit for determining a fourth distance between said corner and said second target interface along said vector;

- a circuit for modifying the coordinates for said corner along said vector as a function of the first distance, the second distance, the third distance and the fourth distance ;
- an interface for outputting a modified model based on the modification of the coordinates for said corner.

13. Computer program product comprising instructions for implementing the method according to one of claims 1 to 11, when that program is executed by a processor.

**Patentansprüche**

1. Computerimplementiertes Verfahren zur Anpassung eines unstrukturierten Mesh (100)-Modells eines geologischen Untergrunds, das unter Verwendung von Messungen des geologischen Untergrunds gewonnen wird, um es an ein Ziel anzupassen,

wobei das unstrukturierte Mesh (100)-Modell eine erste Referenzschnittstelle (201) und eine zweite Referenzschnittstelle (202) aufweist, wobei die erste Referenzschnittstelle (201) zu einer ersten Zielschnittstelle (203) gehört, wobei die zweite Referenzschnittstelle (202) zu einer zweiten Zielschnittstelle (204) gehört,
wobei Maschen des unstrukturierten Mesh-Modells Ecken (301) mit Koordinaten (x, y, z) innerhalb des Modells und mit Parameterwerten (u, v, t) innerhalb des Modells haben, wobei t eine stratigrafische Zeit für Ecken darstellt, wobei das Verfahren **dadurch gekennzeichnet ist, dass** es aufweist:

- für jede Ecke zwischen der ersten Referenzschnittstelle und der zweiten Referenzschnittstelle (501):

- Bestimmen (502) eines Vektors an der Ecke, wobei der Vektor bestimmt wird, um die lokale Schwankung von t zu maximieren, wobei (u, v) entlang des Vektors lokal konstant sind, wobei Werte von Parameterwerten (u, v, t) basierend auf benachbarten Ecken für die Bestimmung des Vektors bestimmt werden;
- Bestimmen eines ersten Abstands zwischen der Ecke und der ersten Referenzschnittstelle entlang des Vektors;
- Bestimmen eines zweiten Abstands zwischen der Ecke und der zweiten Referenzschnittstelle entlang des Vektors;
- Bestimmen eines dritten Abstands zwischen der Ecke und der ersten Zielschnittstelle entlang des Vektors;
- Bestimmen eines vierten Abstands zwischen der Ecke und der zweiten Zielschnittstelle entlang des Vektors;

- Modifizieren (504) der Koordinaten für die Ecke entlang des Vektors als eine Funktion des ersten Abstands, des zweiten Abstands, des dritten Abstands und des vierten Abstands.

2. Verfahren nach Anspruch 1, wobei ein aktuelles Koordinatensystem entlang einer Gerade definiert wird, die durch den Vektor geht,

wobei ein erster Schnitt zwischen der Geraden und der ersten Referenzschnittstelle in dem aktuellen Koordinatensystem eine Koordinate C1 hat;
wobei ein zweiter Schnitt zwischen der Geraden und der zweiten Referenzschnittstelle in dem aktuellen Koordinatensystem eine Koordinate C2 hat;
wobei ein dritter Schnitt zwischen der Geraden und der ersten Zielschnittstelle in dem aktuellen Koordinatensystem eine Koordinate C3 hat;
wobei ein vierter Schnitt zwischen der Geraden und der zweiten Zielschnittstelle in dem aktuellen Koordinatensystem eine Koordinate C4 hat, wobei die aktuelle Ecke in dem aktuellen Koordinatensystem eine Anfangskoordinate Cc hat,
wobei die modifizierte Koordinate, Cn, der aktuellen Ecke in dem aktuellen Koordinatensystem eine Funktion

$$Cn - Cc = C2 - C4 - (C1 - C3 - C2 + C4)\frac{Cc-C2}{C1-C2}$$

von ist.

3. Verfahren nach einem der vorhergehenden Ansprüche, wobei das Verfahren für jede Ecke zwischen der ersten Referenzschnittstelle und der zweiten Referenzschnittstelle ferner aufweist:

- eine zweite Modifikation der Koordinaten der Ecke als eine Funktion der aktuellen Koordinaten der aktuellen Ecke und als eine Funktion der aktuellen Koordinaten von Ecken, die innerhalb eines Begrenzungsrahmens um die aktuelle Ecke herum liegen.

4. Verfahren nach Anspruch 3, wobei die Koordinaten der Ecken durch mehrere Komponenten ausgedrückt werden, wobei die zweite Modifikation der Koordinaten der Ecke das Berechnen eines Medianfilters oder eines Durchschnitts der Koordinaten der aktuellen Ecke entlang wenigstens einer Komponente der Koordinaten und der Ecken, die innerhalb eines Begrenzungsrahmens um die aktuelle Ecke entlang der wenigstens einen gleichen Komponente liegen, aufweist.

5. Verfahren nach einem der Ansprüche 3 bis 4, wobei der Begrenzungsrahmen eine Funktion eines Abstands von der aktuellen Ecke zu einem Fehler in dem Modell ist.

6. Verfahren nach einem der Ansprüche 3 bis 5, wobei der Begrenzungsrahmen eine Funktion einer anisotropen Richtung in dem Modell ist.

7. Verfahren nach Anspruch 6, wobei die anisotrope Richtung parallel zu einer Geraden, die durch die aktuelle Ecke geht, und senkrecht zu einem Fehler in dem Modell ist.

8. Verfahren nach einem der vorhergehenden Ansprüche, wobei die Koordinaten der Ecken durch mehrere Komponenten ausgedrückt werden, wobei der Abstand zwischen einer aktuellen Ecke und einer modifizierten aktuellen Ecke entlang wenigstens einer Koordinatenkomponente kleiner als ein Schwellwert ist.

9. Verfahren nach einem der vorhergehenden Ansprüche, wobei das Modell wenigstens einen Fehler aufweist, wobei das Verfahren ferner aufweist:

- Bestimmen wenigstens einer Ecke mit einem Abstand zu dem wenigstens einen Fehler, der kleiner als ein vorgegebener Einflussabstand ist;
- Modifizieren der Koordinaten der Ecke mit einem Abstand zu dem wenigstens einen Fehler, der kleiner als der vorgegebene Einflussabstand ist, als eine Funktion von Modifikationen, die für mehrere Punkte mit einem Abstand zu dem wenigstens einen Fehler, der größer als der vorgegebene Einflussabstand ist, bestimmt werden, und wobei ein Teil einer gemeinsamen Schnittstelle mit der Ecke einen Abstand zu dem wenigstens einen Fehler hat, der kleiner als der vorgegebene Einflussabstand ist.

10. Verfahren nach Anspruch 9, wobei die Modifikation der Koordinaten der Ecke mit einem Abstand zu dem wenigstens einen Fehler, der kleiner als der vorgegebene Einflussabstand ist, eine Berechnung eines gewichteten Durchschnitts aufweist.

11. Verfahren nach Anspruch 9, wobei die Modifikation der Koordinaten der Ecke mit einem Abstand zu dem wenigstens einen Fehler, der kleiner als der vorgegebene Einflussabstand ist, eine Regression aufweist.

12. Vorrichtung zur Anpassung eines unstrukturierten Mesh-Modells eines geologischen Untergrunds, das unter Verwendung von Messungen des geologischen Untergrunds gewonnen wird, um es an ein Ziel anzupassen,

wobei das unstrukturierte Mesh-Modell eine erste Referenzschnittstelle und eine zweite Referenzschnittstelle aufweist, wobei die erste Referenzschnittstelle zu einer ersten Zielschnittstelle gehört, wobei die zweite Referenzschnittstelle zu einer zweiten Zielschnittstelle gehört,
wobei Maschen des unstrukturierten Mesh-Modells Ecken mit Koordinaten (x, y, z) innerhalb des Modells und mit Parameterwerten (u, v, t) innerhalb des Modells haben, wobei t eine stratigrafische Zeit für Ecken darstellt,
wobei die Vorrichtung **dadurch gekennzeichnet ist, dass** sie aufweist:

- für jede Ecke zwischen der ersten Referenzschnittstelle und der zweiten Referenzschnittstelle:

- eine Schaltung zum Bestimmen eines Vektors an der Ecke, wobei der Vektor bestimmt wird, um die lokale Schwankung von t zu maximieren, wobei (u, v) entlang des Vektors lokal konstant sind, wobei Werte von Parameterwerten (u, v, t) basierend auf benachbarten Ecken für die Bestimmung des Vektors bestimmt werden;
- eine Schaltung zum Bestimmen eines ersten Abstands zwischen der Ecke und der ersten Referenzschnittstelle entlang des Vektors;
- eine Schaltung zum Bestimmen eines zweiten Abstands zwischen der Ecke und der zweiten Referenzschnittstelle entlang des Vektors;
- eine Schaltung zum Bestimmen eines dritten Abstands zwischen der Ecke und der ersten Zielschnittstelle entlang des Vektors;
- eine Schaltung zum Bestimmen eines vierten Abstands zwischen der Ecke und der zweiten Zielschnittstelle entlang des Vektors;
- eine Schaltung zum Modifizieren der Koordinaten für die Ecke entlang des Vektors als eine Funktion des ersten Abstands, des zweiten Abstands, des dritten Abstands und des vierten Abstands:
- eine Schnittstelle zum Ausgeben eines modifizierten Modells basierend auf der Modifikation der Koordinaten für die Ecke.

13. Computerprogrammprodukt, das Anweisungen zum Implementieren des Verfahrens nach einem der Ansprüche 1 bis 11 aufweist, wenn dieses Programm von einem Prozessor ausgeführt wird.

**Revendications**

1. Procédé mis en oeuvre par ordinateur d'adaptation d'un modèle maillé non structuré (100) d'une subsurface géologique obtenu en utilisant des mesures de ladite subsurface géologique, pour le faire correspondre à une cible,

ledit modèle maillé non structuré (100) comprenant une première interface de référence (201) et une seconde interface de référence (202), la première interface de référence (201) étant associée à une première interface cible (203), la seconde interface de référence (202) étant associée à une seconde interface cible (204),
les maillages du modèle maillé non structuré ayant des coins (301) avec des coordonnées (x, y, z) à l'intérieur dudit modèle et avec des valeurs paramétriques (u, v, t) à l'intérieur dudit modèle, t représentant un temps stratigraphique pour les coins le procédé étant **caractérisé en ce qu'**il comprend :

- pour chaque coin entre la première interface de référence et la seconde interface de référence (501) :

- la détermination (502) d'un vecteur audit coin, ledit vecteur est déterminé pour maximiser une variation locale de t, (u, v) étant localement constants le long dudit vecteur, les valeurs des valeurs paramétriques (u, v, t) étant déterminées sur la base des coins voisins pour la détermination dudit vecteur ;
- la détermination d'une première distance entre ledit coin et ladite première interface de référence le long dudit vecteur ;

EP 3 997 489 B1

- la détermination d'une deuxième distance entre ledit coin et ladite seconde interface de référence le long dudit vecteur ;
- la détermination d'une troisième distance entre ledit coin et ladite première interface cible le long dudit vecteur ;
- la détermination d'une quatrième distance entre ledit coin et ladite seconde interface cible le long dudit vecteur ;
- la modification (504) des coordonnées pour ledit coin le long dudit vecteur en fonction de la première distance, de la deuxième distance, de la troisième distance et de la quatrième distance.

2. Procédé selon la revendication 1, dans lequel, un système de coordonnées courant étant défini le long d'une ligne passant par ledit vecteur,

une première intersection entre ladite ligne et ladite première interface de référence ayant une coordonnée $c_1$ dans le système de coordonnées courant,
une deuxième intersection entre ladite ligne et ladite seconde interface de référence ayant une coordonnée $c_2$ dans le système de coordonnées courant,
une troisième intersection entre ladite ligne et ladite première interface cible ayant une coordonnée $c_3$ dans le système de coordonnées courant,
une quatrième intersection entre ladite ligne et ladite seconde interface cible ayant une coordonnée $c_4$ dans le système de coordonnées courant, ledit coin courant ayant une coordonnée initiale $c_c$ dans le système de coordonnées courant,
la coordonnée modifiée, *Cn,* dudit coin courant dans le système de coordonnées courant est une fonction de

$$Cn - Cc = C2 - C4 - (C1 - C3 - C2 + C4)\frac{Cc - C2}{C1 - C2}$$
.

3. Procédé selon l'une des revendications précédentes, dans lequel le procédé comprend en outre, pour chaque coin entre la première interface de référence et la seconde interface de référence :

- une seconde modification des coordonnées dudit coin en fonction des coordonnées courantes dudit coin courant et en fonction des coordonnées courantes de coins qui se trouvent à l'intérieur d'une boîte de délimitation autour du coin courant.

4. Procédé selon la revendication 3, dans lequel, les coordonnées des coins étant exprimées par une pluralité de composantes, la seconde modification des coordonnées dudit coin comprend le calcul d'un filtre médian ou d'une moyenne des coordonnées dudit coin courant le long d'au moins une composante des coordonnées et desdits coins qui se trouvent à l'intérieur d'une boîte de délimitation autour du coin courant le long de la même au moins une composante.

5. Procédé selon l'une des revendications 3 à 4, dans lequel la boîte de délimitation est fonction d'une distance allant dudit coin courant à une faille dans ledit modèle.

6. Procédé selon l'une des revendications 3 à 5, dans lequel la boîte de délimitation est fonction d'une direction anisotrope dans ledit modèle.

7. Procédé selon la revendication 6, dans lequel la direction anisotrope est parallèle à une ligne passant par ledit coin courant et perpendiculaire à une faille dans ledit modèle.

8. Procédé selon l'une des revendications précédentes, dans lequel, les coordonnées des coins étant exprimées par une pluralité de composantes, la distance entre un coin courant et un coin courant modifié, le long d'au moins une composante de coordonnées, est inférieure à une valeur seuil.

9. Procédé selon l'une des revendications précédentes, dans lequel, le modèle comprenant au moins une faille, le procédé comprend en outre :

- l'identification d'au moins un coin ayant une distance par rapport à l'au moins une faille qui est inférieure à une distance d'influence prédéterminée ;

- la modification des coordonnées du coin ayant une distance par rapport à l'au moins une faille qui est inférieure à la distance d'influence prédéterminée, en fonction de modifications déterminées pour une pluralité de points ayant une distance par rapport à l'au moins une faille qui est supérieure à la distance d'influence prédéterminée et une partie d'une interface commune avec le coin ayant une distance par rapport à l'au moins une faille qui est inférieure à la distance d'influence prédéterminée.

10. Procédé selon la revendication 9, dans lequel la modification des coordonnées du coin ayant une distance par rapport à l'au moins une faille qui est inférieure à la distance d'influence prédéterminée comprend un calcul d'une moyenne pondérée.

11. Procédé selon la revendication 9, dans lequel la modification des coordonnées du coin ayant une distance par rapport à l'au moins une faille qui est inférieure à la distance d'influence prédéterminée comprend une régression.

12. Dispositif d'adaptation d'un modèle maillé non structuré d'une subsurface géologique obtenu en utilisant des mesures de ladite subsurface géologique, pour le faire correspondre à une cible,

ledit modèle maillé non structuré comprenant une première interface de référence et une seconde interface de référence, la première interface de référence étant associée à une première interface cible, la seconde interface de référence étant associée à une seconde interface cible,
les maillages du modèle maillé non structuré ayant des coins avec des coordonnées (x, y, z) à l'intérieur dudit modèle et avec des valeurs paramétriques (u, v, t) à l'intérieur dudit modèle, t représentant un temps stratigraphique pour les coins
le dispositif étant **caractérisé en ce qu'**il comprend :

- pour chaque coin entre la première interface de référence et la seconde interface de référence :

- un circuit de détermination d'un vecteur audit coin, ledit vecteur est déterminé pour maximiser une variation locale de t, (u, v) étant localement constants le long dudit vecteur, les valeurs des valeurs paramétriques (u, v, t) étant déterminées sur la base des coins voisins pour la détermination dudit vecteur ;
- un circuit de détermination d'une première distance entre ledit coin et ladite première interface de référence le long dudit vecteur ;
- un circuit de détermination d'une deuxième distance entre ledit coin et ladite seconde interface de référence le long dudit vecteur ;
- un circuit de détermination d'une troisième distance entre ledit coin et ladite première interface cible le long dudit vecteur ;
- un circuit de détermination d'une quatrième distance entre ledit coin et ladite seconde interface cible le long dudit vecteur ;
- un circuit de modification des coordonnées pour ledit coin le long dudit vecteur en fonction de la première distance, de la deuxième distance, de la troisième distance et de la quatrième distance ;
- une interface de sortie d'un modèle modifié basé sur la modification des coordonnées dudit coin.

13. Produit de programme informatique comprenant des instructions pour mettre en oeuvre le procédé selon l'une des revendications 1 à 11, quand ce programme est exécuté par un processeur.

**FIG. 1**

EP 3 997 489 B1

EP 3 997 489 B1

**FIG. 2**

**FIG. 3a**

**FIG. 3b**

EP 3 997 489 B1

**FIG. 4**

EP 3 997 489 B1

FIG. 5

EP 3 997 489 B1

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3106900 A